# EUROPÄISCHE PATENTSCHRIFT

(11) **EP 2 477 048 B1**
(45) Veröffentlichungstag und Bekanntmachung des Hinweises auf die Patenterteilung: **06.12.2017**
(21) Anmeldenummer: 11000277.1
(22) Anmeldetag: 14.01.2011
(51) Int. Cl.: G01V 8/20

(54) **Lichtgittergehäuse**
Light grid housing
Boîtier de barrière lumineuse

(43) Veröffentlichungstag der Anmeldung: 18.07.2012
(73) Patentinhaber: SICK AG, 79183 Waldkirch/Breisgau (DE)
(72) Erfinder: Matt, Sebastian, 77796 Mühlenbach (DE); Opfolter, Matthias, 79211 Denzlingen (DE)
(74) Vertreter: Manitz Finsterwald Patentanwälte PartmbB

(56) Entgegenhaltungen:
- EP-A1- 1 577 684
- EP-A1- 1 978 378
- EP-A2- 0 959 371
- DE-A1-102004 046 725
- DE-U1-202005 016 606
- DE-U1-202006 000 528
- US-A1- 2003 106 992

## Beschreibung

Die Erfindung betrifft eine Lichtgittergehäuseaordnung mit einem Lichtgittergehäuse für ein Lichtgitter mit mehreren Sendeelementen und mit mehreren Empfangselementen zur Überwachung eines Überwachungsraumes, wobei in dem Gehäuse die Sendeelemente und/oder die Empfangselemente in wenigstens einer Reihe angeordnet sind. Die Erfindung betrifft weiterhin ein entsprechendes Lichtgitter.

Lichtgitter bestehen in der Regel aus einem Sender und einem räumlich davon getrennten Empfänger. Sender und Empfänger umfassen mehrere Sende- bzw. Empfangselemente, die einen Überwachungsraum aufspannen. Dabei wird von den Sendeelementen jeweils Licht in Richtung eines der Empfangselemente gesendet. Wird ein solcher Lichtstrahl unterbrochen und insofern kein Licht an dem entsprechenden Empfängerelement empfangen, deutet dies auf ein Objekt im Überwachungsraum zwischen Sender und Empfänger hin. Ein entsprechendes Signal kann z.B. zum Abschalten einer Maschine verwendet werden, bei der ein solches Eindringen eines Objektes unerwünscht oder gefährlich ist.

Ebenso können auf einer Seite des Überwachungsraumes die Sende- und Empfangselemente und auf der gegenüber liegenden Seite Reflektoren angeordnet sein, die das Licht der Sendelemente zu den Empfangselementen reflektieren.

Die Sendeelemente einerseits und die Empfangselemente andererseits sind in der Regel in einem lang gestreckten Gehäuse angeordnet, das auf seiner dem Überwachungsraum zugewandten Seite entweder vollständig transparent ausgestaltet ist oder entsprechende Fenster aufweist, durch die ein Lichtstrahl treten kann. Alternativ können die Sende- und/oder Empfangselemente auch direkt in der vorderen Gehäuseaußenwand integriert sein.

Ein Lichtgitter ist z.B. in EP-B-0 369 386 B1 gezeigt.

Wünschenswert ist es dabei, wenn die Sende- bzw. Empfangselemente bis an den Gehäuserand ausgebildet sein können, um eine möglichst kleine Blindzone zu erhalten, in der sich kein Sender bzw. Empfänger befindet. Insbesondere könnte durch sehr kleine solche Blindbereiche eine Kaskadierung mehrerer nebeneinander angeordneter Lichtgitter leichter bewerkstelligt werden.

Außerdem wäre es wünschenswert, eine Befestigung für das Lichtgittergehäuse zu haben, die möglichst wenig Einbauraum benötigt.

EP 1 577 684 A1 und DE 10 2004 046 725 A1 beschreiben Lichtgittergehäuse mit einem rückwärtigen Anschlussraum für eine elektronische Anschlussplatine.

EP 0 959 371 A1 und DE 20 2006 000 528 U1 beschreiben Gehäuse für Lichtgitter mit einem sich entlang des Lichtgitters erstreckenden Aufnahmeraum für Anschlusskabel.

EP 1 978 378 A1 beschreibt eine Lichtgittergehäuseanordnung mit einem Anschlusskabel an der dem Überwachungsraum abgewandten Seite.

Aufgabe der vorliegenden Erfindung ist es dementsprechend, die Blindbereiche am Gehäuserand des Lichtgitters möglichst klein zu gestalten, ohne die Einbaumaße des Gerätes negativ zu beeinflussen.

Die Aufgabe wird mit einer Lichtgittergehäuseanordnung mit den Merkmalen des Anspruchs 1 bzw. mit einem Lichtgitter mit den Merkmalen des Anspruchs 7 gelöst. Unteransprüche sind jeweils auf bevorzugte Ausführungsformen gerichtet.

Eine erfindungsgemäße Lichtgittergehäuseanordnung weist an einer rückwärtigen, dem Überwachungsraum abgewandten Seite einen sich im Wesentlichen parallel zu der wenigstens einen Reihe der Sendeelemente oder Empfangselemente erstreckenden Aufnahmeraum zur Aufnahme wenigstens eines Anschlusskabels zur elektrischen Kontaktierung des Lichtgitters auf. Die elektrische Kontaktierung des Lichtgitters meint dabei zum Beispiel die direkte oder indirekte elektrische Kontaktierung der Sendeelemente und/oder Empfangselemente und/oder einer mit diesen verbundenen Steuer- und Auswerteeinheit. In dem Aufnahmeraum einer erfindungsgemäß ausgestalteten Lichtgittergehäuseanordnung kann das wenigstens eine Anschlusskabel den Gegebenheiten angepasst von dem Lichtgittergehäuse weggeführt werden, ohne zusätzlichen Einbauraum zu benötigen. Mehrere Lichtgitter können in sehr flexibler Art und Weise nebeneinander gestaltet werden, ohne dass Blindbereiche an den Rändern des Lichtgittergehäuses zu groß wären und nicht überwachter Bereich entstehen würde, in dem keine Sende-/Empfangselemente angeordnet wären.

Besonders einfach und kostengünstig ist es, dass der Aufnahmeraum durch einen nach außen offenen, von der dem Überwachungsraum abgewandten Seite des Lichtgittergehäuses zurückgesetzten Bereich gebildet ist.

Der Aufnahmeraum dient zudem der Befestigung des Lichtgittergehäuses. Dazu sind in dem Aufnahmeraum erste Eingreifelemente zum Eingriff in zweite Eingreifelemente wenigstens eines Halteelements zur Befestigung des Lichtgittergehäuses vorgesehen. Das Halteelement kann z.B. an einer Wand befestigt sein. Besonders flexibel ist die erfindungsgemäße Lichtgittergehäuseanordnung dadurch, dass das bzw. die Halteelemente durch einen bzw. mehrere Nutensteine gebildet werden und die an dem Lichtgittergehäuse vorgesehenen Eingreifelemente zum Eingriff in die Nuten des Nutensteins ausgebildet sind.

Je nachdem, in welcher Form und Größe der Aufnahmeraum gestaltet ist, können auch mehrere Anschlusskabel aufgenommen werden.

Besonders vorteilhaft ist der Aufnahmeraum in einer Weise ausgestaltet, dass ein darin geführtes Anschlusskabel über keine Seite des Lichtgittergehäuses hinaus steht, die parallel zu der wenigstens einen Reihe der Sendeelemente oder Empfangselemente ist.

Eine einfache Ausgestaltung sieht vor, dass sich der Aufnahmeraum entlang der gesamten Längserstreckung des Lichtgittergehäuses erstreckt. Eine solche Gehäuseform ist einfach herzustellen und ergibt eine große Flexibilität beim Einbau.

Es ist aber nicht ausgeschlossen, dass bei entsprechenden Einbauanforderungen das Anschlusskabel auch nicht bis zum Ende des Gehäuses geführt ist, sondern seitlich aus dem Aufnahmeraum herausgeführt wird.

Eine besonders bevorzugte Ausgestaltung sieht vor, dass der Querschnitt des Aufnahmeraums in einer Richtung parallel zur Verbindungsrichtung zwischen Überwachungsraum und Rückseite des Lichtgittergehäuses dreieckig ist, wobei sich eine erste Dreiecksfläche auf der dem Überwachungsraum abgewandten Seite des Lichtgittergehäuses befindet und sich eine zweite Dreiecksfläche an einer Verbindungsfläche zwischen der dem Überwachungsraum zugewandten Seite und der dem Überwachungsraum abgewandten Seite des Lichtgittergehäuses. Der entsprechende Querschnitt des Aufnahmeraums bildet dann eine "abgeschnittene" Ecke des Querschnitts des Lichtgittergehäuses. Dies ist einfach herzustellen und bietet besondere Vorteile bei der Montage des Lichtgittergehäuses, wie weiter unten noch erläutert werden wird. Vorzugsweise ist der genannte Querschnitt des Aufnahmeraums gleichschenklig und insofern symmetrisch, was in noch zu erläuternder Weise für die Flexibilität des Lichtgittergehäuseeinbaus vorteilhaft ist.

Der erfindungsgemäße Vorteil des durch den Anschluss nicht vergrößerten Einbauraums lässt sich besonders gut realisieren, wenn ein ansonsten im Wesentlichen rechteckiges Lichtgittergehäuse und der Aufnahmeraum derart ausgestaltet sind, dass ihre Querschnitte sich im Wesentlichen zu einem Rechteck ergänzen.

Besonders vorteilhaft ist es, wenn ein Lichtgittergehäuse mit einem im Querschnitt dreieckigen Aufnahmeraum und einer Nutensteinhalterung als Halteelement gewählt wird, die eine Verschwenkung des Nutensteins um eine Achse erlaubt, die parallel zu der wenigstens einen Reihe aus Sendeelementen oder Empfangselementen in dem Lichtgittergehäuse ist. Dazu weist der Nutenstein vorzugsweise eine Bohrung auf, die sich im montierten Zustand des Lichtgittergehäuses parallel zu der Reihe von Sendeelementen oder Empfangselementen erstreckt. Ein solcher Nutenstein lässt sich problemlos in verschiedenen Raumausrichtungen montieren, so dass eine flexible Montage des Lichtgittergehäuses einfach möglich ist.

Die Erfindung betrifft außerdem ein Lichtgitter mit wenigstens einem erfindungsgemäß ausgestalteten Lichtgittergehäuse bzw. einer erfindungsgemäß ausgestalteten Lichtgittergehäuseanordnung.

Die Vorteile und besonders bevorzugten Ausgestaltungen des erfindungsgemäßen Lichtgitters ergeben sich aus der obigen Schilderung der Vorteile und Ausgestaltungen des erfindungsgemäßen Lichtgittergehäuses bzw. der erfindungsgemäßen Lichtgittergehäuseanordnung.

Die Erfindung wird anhand der beiliegenden Figuren im Detail beschrieben, die erfindungsgemäße Ausführungsformen darstellen. Es zeigen
- Fig. 1: eine perspektivische Ansicht einer Ausführungsform einer erfindungsgemäßen Lichtgittergehäuseanordnung;
- Fig. 2: eine perspektivische Darstellung eines Nutensteins zur Befestigung eines Lichtgittergehäuses einer erfindungsgemäßen Lichtgittergehäuseanordnung;
- Fig. 3: einen Teilquerschnitt einer Lichtgittergehäuseanordnung der Fig. 1;
- Fig. 4: eine schematische Darstellung des Querschnitts einer Ausführungsform einer erfindungsgemäßen Lichtgittergehäuseanordnung;
- Fig. 5a und 5b: schematische Darstellungen der Befestigung einer Ausführungsform einer erfindungsgemäßen Lichtgittergehäuseanordnung mit einem im Querschnitt dreieckigen Halteelement;
- Fig. 6a und 6b: schematische Darstellungen der Befestigung einer Ausführungsform einer erfindungsgemäßen Lichtgittergehäuseanordnung mit einem anders geformten Halteelement;
- Fig. 7: eine schematische Darstellung einer Befestigung einer Ausführungsform einer erfindungsgemäßen Lichtgittergehäuseanordnung mit einem wiederum anders ausgestalteten Halteelement;
- Fig. 8: die Anordnung der Fig. 7 in einem anderen Befestigungsmodus.

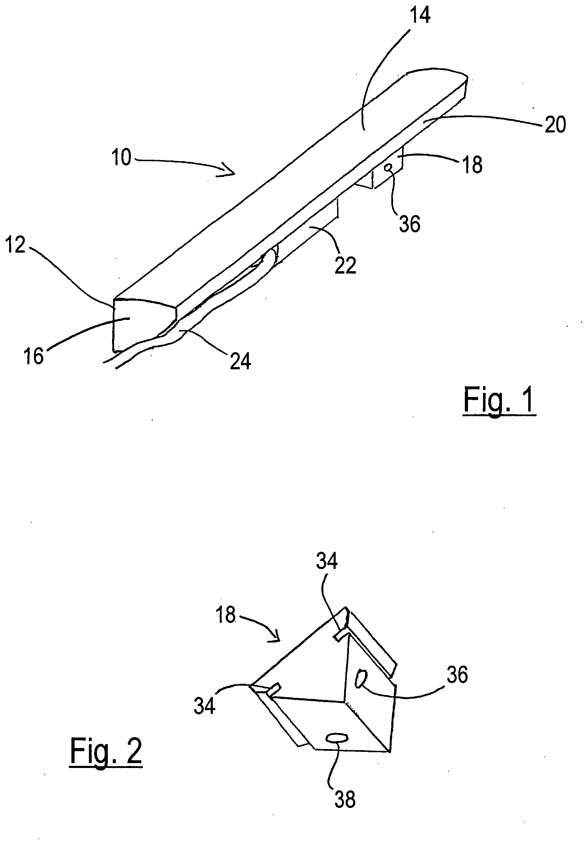

In Fig. 1 erkennt man das Lichtgittergehäuse 10 mit einer rückwärtigen Seite 20, einer Seitenfläche 14 und einer Stirnseite 16. Von der Figurenebene abgewandt ist die Vorderseite 12 des Lichtgittergehäuses 10, die dem Überwachungsraum zugewandt ist und in deren Fläche die Sende- bzw. Empfangselemente angeordnet sind. Alternativ kann hier ein oder können hier mehrere Fenster vorgesehen sein, durch das/die die in dem Lichtgittergehäuse 10 befindlichen Sende- und/oder Empfangselemente in an sich bekannter Weise optisch mit dem Überwachungsraum kommunizieren.

Bezugsziffer 22 bezeichnet ein Anschlusselement, mit dessen Hilfe die in dem Lichtgittergehäuse 10 angeordneten Sende- und/oder Empfangselemente kontaktiert werden können. Dazu dient ein mit dem Anschlusselement 22 verbundenes Anschlusskabel 24. Das Anschlusselement kann insbesondere auch eine Steuer- und Auswerteeinheit des Lichtgitters umfassen oder durch eine solche gebildet sein, mit der die Sende- und/oder Empfangselemente verbunden sind.

Bezugsziffer 18 bezeichnet einen Nutenstein, der in Fig. 2 in perspektivischer Darstellung gezeigt ist. Er weist einen im Wesentlichen dreieckigen Querschnitt auf. Senkrecht zu diesem Querschnitt erstrecken sich Nuten 34. Befestigungslöcher 36 und 38 sind in Längsrichtung versetzt angeordnet, um unterschiedliche Montageausrichtungen in noch zu beschreibender Weise zu ermöglichen.

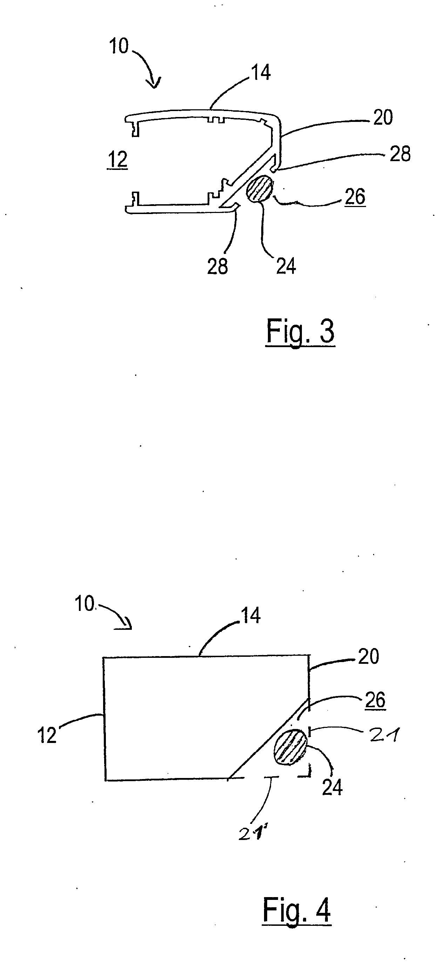

Fig. 3 zeigt einen Querschnitt durch ein Lichtgittergehäuse der Fig. 1 in einer Richtung parallel zur Stirnfläche 16 in einem Bereich, in dem sich auch das Anschlusskabel 24 befindet. Auf der Seite 12 des Gehäuses 10 ist die Öffnung erkennbar, durch die Licht in das Lichtgittergehäuse eintreten bzw. aus dem Lichtgittergehäuse austreten kann. In nicht dargestellter Weise ist hier ein Fenster vorgesehen.

Im Querschnitt der Fig. 3 ist der Aufnahmeraum 26 erkennbar, der hier an einem schrägen Teil des Lichtgittergehäuses 10 angeordnet ist und einen im Wesentlichen dreieckigen Querschnitt hat, der sich mit dem Querschnitt des Lichtgittergehäuses 10 im Wesentlichen zu einem Rechteck ergänzt. In diesem Aufnahmeraum 26 ist Platz für das im Querschnitt sichtbare Anschlusskabel 24. In den Aufnahmeraum ragen Eingreifelemente 28, die sich senkrecht zur Figurenebene der Fig. 3 entlang der Längserstreckung des Lichtgittergehäuses erstrecken und ausgestaltet sind, um in die Nuten 34 des Nutensteins 18 eingreifen zu können, wie er z.B. in Fig. 2 gezeigt ist.

Damit ergibt sich in schematischer Darstellung ein Querschnitt, wie er in Fig. 4 gezeigt ist. Bezugsziffern 21 und 21' bezeichnen die hier als Dreiecksflächen bezeichneten gedachten Flächen, die sich senkrecht zu der genannten dreieckigen Querschnittsfläche des Aufnahmeraums 26 erstrecken.

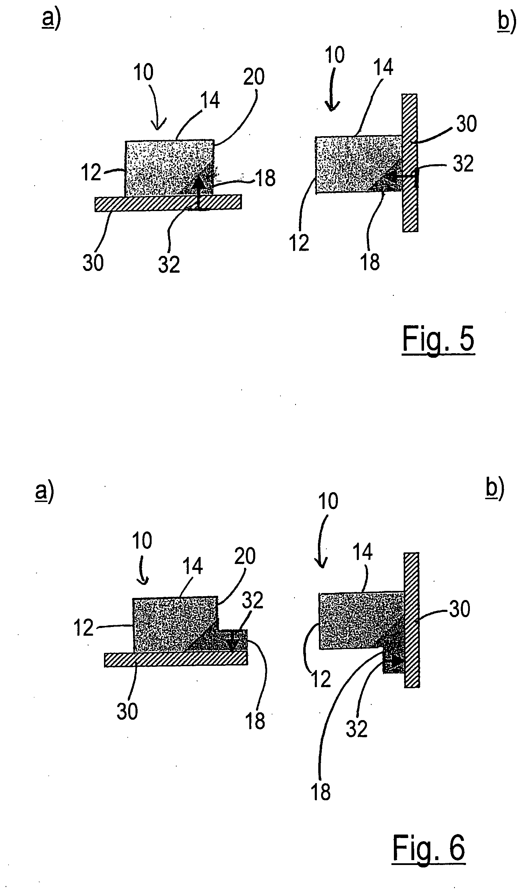

Die im Folgenden beschriebenen Fig. 5, 6, 7 und 8 sind wie die Fig. 4 nur schematischer Natur.

Fig. 5 zeigt die Befestigung eines Lichtgittergehäuses 10 im Querschnitt an einer Wand 30. In die Öffnung 38 des Nutensteins 18 greift z.B. eine Schraube ein, die durch die Wand 30 in Pfeilrichtung 32 in den Nutenstein 18 eingeschraubt wird. Ohne an dem Lichtgittergehäuse 10 oder der Befestigung des Nutensteins an dem Lichtgittergehäuse über die Nuten 34 und die Eingreifelemente 28 etwas ändern zu müssen, ist aber auch eine Befestigung in einer Ausrichtung möglich, die in Fig. 5b gezeigt ist. Hier greift eine durch die Wand 30 in Pfeilrichtung 32 greifende Schraube in die Öffnung 36 in den Nutenstein 18 ein.

In Fig. 6a und 6b sind in der Ausrichtung entsprechende Anordnungen gezeigt, wobei ein Nutenstein 18 zum Einsatz kommt, der einen Ansatz aufweist, so dass jeweils eine Schraube in Pfeilrichtung 32 durch den Nutenstein 18 hindurch in eine entsprechende Öffnung in der Wand 30 eingeführt werden kann.

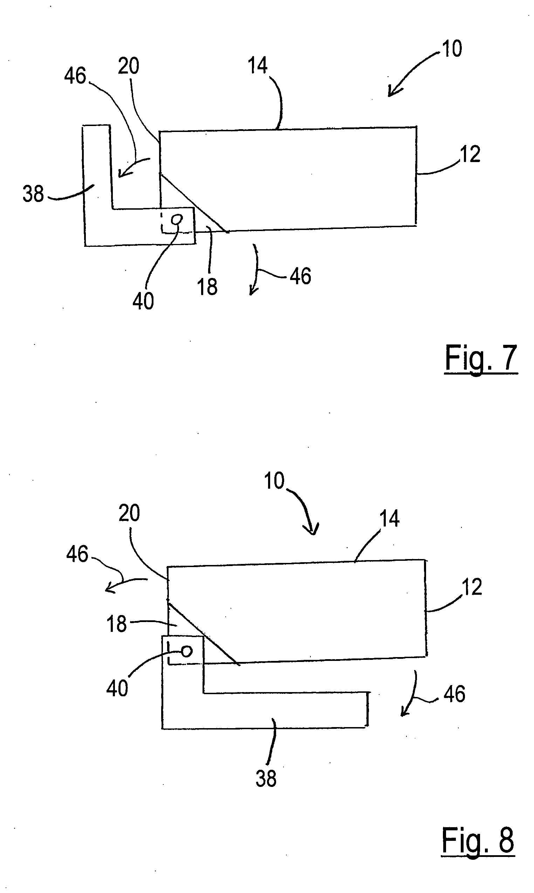

Fig. 7 und 8 zeigen in schematischer Darstellung eine Ausführungsform der Anordnung, in der der Nutenstein 18 eine Querbohrung aufweist. Eine Halterung 38 ist z.B. so ausgestaltet, dass sie in axialer Richtung dieser Querbohrung angreift und ebenfalls eine Bohrung 40 aufweist, die mit dieser Querbohrung korrespondiert. Durch die so koaxial angeordneten Bohrungen in dem Befestigungselement 38 und dem Nutenstein 18 kann dann z.B. eine Schraube geführt werden, mit deren Hilfe das Befestigungselement 38 an dem Nutenstein 18 verspannt werden kann. In Pfeilrichtung 36 ist dann eine Verschwenkung des Lichtgittergehäuses 10 um eine Achse möglich, die koaxial zu der Bohrung 40 ist. Eine flexible Ausrichtung des Lichtgittergehäuses 10 ist damit möglich. Festziehen der Schraube durch die Bohrung 40 ermöglicht ein Feststellen des Lichtgittergehäuses 10 in einer ausgewählten Ausrichtung.

Fig. 8 zeigt eine ähnliche Anordnung, wobei hier die Relation zwischen der Halterung 38 und dem Lichtgittergehäuse 10 anders gewählt ist, um andere Ausrichtungen zu ermöglichen.

Die erfindungsgemäßen Ausgestaltungen der Lichtgittergehäuseanordnung beziehungsweise des davon umfassten Lichtgittergehäuses ermöglichen eine besonders flexible und Bauraum einsparende Befestigung des Lichtgittergehäuses. Insbesondere ist damit auch auf einfache Weise eine Anordnung mehrerer Lichtgittergehäuse nebeneinander möglich, um den Überwachungsbereich entsprechend zu vergrößern. Nicht von den Lichtgittern erfassbare Bereiche (Blindbereiche) werden effektiv klein gehalten.

### Bezugszeichenliste

- 10: Lichtgittergehäuse
- 12: Vorderseite
- 14: Seitenfläche
- 16: Stirnfläche
- 18: Nutenstein
- 20: Rückseite
- 21: erste gedachte Dreiecksfläche
- 21': zweite gedachte Dreiecksfläche
- 22: Anschlussstück
- 24: Anschlusskabel
- 26: Aufnahmeraum
- 28: Eingreifelement
- 30: Wand
- 32: Einschraubrichtung
- 34: Nut
- 36, 38: Befestigungsloch
- 40: Bohrung
- 46: Verschwenkrichtung

## Patentansprüche

1. Lichtgittergehäuseanordnung mit einem Lichtgittergehäuse (10) für ein Lichtgitter mit mehreren Sendeelementen und mehreren Empfangselementen zur Überwachung eines Überwachungsraumes, wobei in dem Gehäuse (10) die Sendeelemente und/oder die Empfangselemente in wenigstens einer Reihe angeordnet sind und sich an dem Lichtgittergehäuse (10) an einer rückwärtigen, dem Überwachungsraum abgewandten Seite (20) ein sich im Wesentlichen parallel zu der wenigstens einen Reihe der Sendeelemente oder Empfangselemente erstreckender Aufnahmeraum (26) zur Aufnahme wenigstens eines Anschlusskabels (24) zur elektrischen Kontaktierung des Lichtgitters befindet,
wobei der Aufnahmeraum (26) durch einen nach außen offenen, von der dem Überwachungsraum abgewandten Seite (20) des Lichtgittergehäuses (10) zurückgesetzten Bereich gebildet ist, und wobei die Lichtgittergehäuseanordnung wenigstens ein Halteelement (18) aufweist, **dadurch gekennzeichnet, dass** in dem Aufnahmeraum (26) zur Befestigung des Lichtgittergehäuses (10) erste Eingreifelemente (28) zum Eingriff in zweite Eingreifelemente (34) des wenigstens einen Halteelementes (18) vorgesehen sind, und wobei das wenigstens eine Halteelement einen Nutenstein (18) umfasst, dessen Nuten (34) die zweiten Eingreifelemente bilden.

2. Lichtgittergehäuseanordnung nach Anspruch 1, **dadurch gekennzeichnet, dass** der Aufnahmeraum (26) die Aufnahme des Anschlusskabels (24) derart erlaubt, dass ein darin geführtes Anschlusskabel (24) über keine Seite (20) des Lichtgittergehäuses (10) hinaussteht, die parallel zu der wenigstens einen Reihe der Sendeelemente oder Empfangselemente ist.

3. Lichtgittergehäuseanordnung nach einem der Ansprüche 1 oder 2, **dadurch gekennzeichnet, dass** sich der Aufnahmeraum (26) entlang der gesamten Längserstreckung des Lichtgittergehäuses (10) erstreckt.

4. Lichtgittergehäuseanordnung nach einem der Ansprüche 1 bis 3, **dadurch gekennzeichnet, dass** der Querschnitt des Aufnahmeraumes (26) parallel zur Verbindungsrichtung zwischen Überwachungsraum und Rückseite (20) des Lichtgittergehäuses (10) dreieckig, vorzugsweise gleichschenklig, ist, wobei sich eine erste Dreiecksfläche (21) auf der dem Überwachungsraum abgewandten Seite (20) des Lichtgittergehäuses (10) befindet und sich eine zweite Dreiecksfläche (21') an einer Verbindungsfläche zwischen der dem Überwachungsraum zugewandten und der dem Überwachungsraum abgewandten Seite des Lichtgittergehäuses (10) befindet.

5. Lichtgittergehäuseanordnung nach einem der Ansprüche 1 bis 4, **dadurch gekennzeichnet, dass** der Querschnitt des Aufnahmeraumes (26) parallel zur Verbindungsrichtung zwischen Überwachungsraum und Rückseite (20) des Lichtgittergehäuses und der entsprechende Querschnitt des Lichtgittergehäuses (10) zu einer im Wesentlichen rechteckigen Form ergänzen, wobei der Querschnitt des Lichtgittergehäuses (10) vorzugsweise einem unregelmäßigen Fünfeck entspricht.

6. Lichtgittergehäuseanordnung nach einem der Ansprüche 1 bis 5, **dadurch gekennzeichnet, dass** der Aufnahmeraum (26) einen dreieckigen Querschnitt aufweist, und dass die Lichtgittergehäuseanordnung weiterhin eine Nutensteinhalterung (38) umfasst, die eine Verschwenkung (46) des Nutensteines (18) um eine Achse erlaubt, die parallel zu der wenigstens einen Reihe aus Sendeelementen oder Empfangselementen ist.

7. Lichtgitter
- mit wenigstens einer Lichtgittergehäuseanordnung nach einem der Ansprüche 1 bis 6,
- einer Anzahl in dem Lichtgittergehäuse (10) in wenigstens einer Reihe angeordneten Sendeelementen und/oder Empfangselementen und
- wenigstens einem durch den Aufnahmeraum (26) geführten Anschlusskabel (24) zur elektrischen Kontaktierung des Lichtgitters.

## Claims

1. A light grid housing arrangement comprising a light grid housing (10) for a light grid having a plurality of transmission elements and a plurality of reception elements for monitoring a monitored zone, wherein the transmission elements and/or the reception elements are arranged in at least one row in the housing (10) and a receiving space (26) for receiving at least one connection cable (24) for electrically contacting the light grid extends substantially in parallel with the at least one row of transmission elements or reception elements and is located at the light grid housing (10) at a rear side (20) remote from the monitored zone;
wherein the receiving space (26) is formed by an outwardly open region set back from the side (20) of the light grid housing (10) remote from the monitored zone; and wherein the light grid housing arrangement has at least one holding element (18),
**characterized in that** first engagement elements (28) for engaging into second engagement elements (34) of the at least one holding element (18) are provided in the receiving space (26) for fastening the light grid housing (10);
and wherein the at least one holding element comprises a groove block (18) whose grooves (34) form the second engagement elements.

2. A light grid housing arrangement in accordance with claim 1, **characterized in that** the receiving space (26) allows the reception of the connection cable (24) such that a connection cable (24) conducted therein does not project beyond any side (20) of the light grid housing (10) which is in parallel with the at least one row of transmission elements or reception elements.

3. A light grid housing arrangement in accordance with one of the claims 1 or 2,
**characterized in that** the receiving space (26) extends along the entire longitudinal extent of the light grid housing (10).

4. A light grid housing arrangement in accordance with any one of the claims 1 to 3,
**characterized in that** the cross-section of the receiving space (26) in parallel with the connection direction between the monitored zone and the rear side (20) of the light grid housing (10) is triangular, preferably isosceles, with a first triangle area (21) being located at the side (20) of the light grid housing (10) remote from the monitored zone and a second triangle area (21') being located at a connection surface between the side of the light grid housing (10) facing the monitored zone and the side of said light grid housing remote from the monitored zone.

5. A light grid housing arrangement in accordance with any one of the claims 1 to 4,
**characterized in that** the cross-section of the receiving space (26) in parallel with the connection direction between the monitored zone and the rear side (20) of the light grid housing (10) and the corresponding cross-section of the light grid housing (10) complement one another to form a substantially rectangular shape, with the cross-section of the light grid housing (10) preferably corresponding to an irregular pentagon.

6. A light grid housing arrangement in accordance with any one of the claims 1 to 5,
**characterized in that** the receiving space (26) has a triangular cross-section; and **in that** the light grid housing arrangement furthermore comprises a groove block holder (38) which allows a pivoting (46) of the groove block (18) about an axis which is in parallel with the at least one row of transmission elements or reception elements.

7. A light grid
- having at least one light grid housing arrangement in accordance with any one of the claims 1 to 6;
- having a number of transmission elements and/or reception elements arranged in at least one row in the light grid housing (10); and
- having at least one connection cable (24), conducted through the receiving space (26), for electrically contacting the light grid.

## Revendications

1. Agencement de boîtier de grille lumineuse comportant un boîtier de grille lumineuse (10) pour une grille lumineuse comportant plusieurs éléments émetteurs et plusieurs éléments récepteurs pour surveiller un local à surveiller,
dans lequel, dans le boîtier (10), les éléments émetteurs et/ou les éléments récepteurs sont agencés en au moins une rangée,
et sur le boîtier de grille lumineuse (10), sur un côté arrière (20) détourné du local à surveiller, il est prévu un espace de logement (26) qui s'étend sensiblement parallèlement à ladite au moins une rangée d'éléments émetteurs ou d'éléments récepteurs et qui est destiné à loger au moins un câble de connexion (24) pour la mise en contact électrique de la grille lumineuse, dans lequel l'espace de logement (26) est formé par une zone ouverte vers l'extérieur et en retrait par rapport au côté (20), détourné du local à surveiller, du boîtier de grille lumineuse (10),
et l'agencement de boîtier de grille lumineuse comprend au moins un élément de maintien (18),
**caractérisé en ce que**
dans l'espace de logement (26), afin de fixer le boîtier de grille lumineuse (10), il est prévu de premiers éléments d'engagement (28) pour s'engager dans de seconds éléments d'engagement (34) dudit au moins un élément de maintien (18),
et ledit au moins un élément de maintien comprend un coulisseau (18) dont les rainures (34) constituent les seconds éléments d'engagement.

2. Agencement de boîtier de grille lumineuse selon la revendication 1, **caractérisé en ce que**
l'espace de logement (26) permet de loger le câble de connexion (24) de telle sorte qu'un câble de connexion (24) mené dans celui-ci ne dépasse aucun côté (20) du boîtier de grille lumineuse (10), qui est parallèle à ladite au moins une rangée d'éléments émetteurs ou d'éléments récepteurs.

3. Agencement de boîtier de grille lumineuse selon l'une des revendications 1 ou 2,
**caractérisé en ce que**
l'espace de logement (26) s'étend le long de toute l'extension longitudinale du boîtier de grille lumineuse (10).

4. Agencement de boîtier de grille lumineuse selon l'une des revendications 1 à 3,
**caractérisé en ce que**
la section transversale de l'espace de logement (26) parallèlement à la direction de liaison entre le local à surveiller et le côté arrière (20) du boîtier de grille lumineuse (10) est triangulaire, de préférence isocèle, une première surface triangulaire (21) se trouvant sur le côté (20), détourné du local à surveiller, du boîtier de grille lumineuse (10), et une seconde surface triangulaire (21') se trouvant sur une surface de liaison entre le côté du boîtier de grille lumineuse (10) tourné vers le local à surveiller et celui détourné du local à surveiller.

5. Agencement de boîtier de grille lumineuse selon l'une des revendications 1 à 4,
**caractérisé en ce que**
la section transversale de l'espace de logement (26) parallèlement à la direction de liaison entre le local à surveiller et le côté arrière (20) du boîtier de grille lumineuse (10) et la section transversale correspondante du boîtier de grille lumineuse (10) se complètent pour donner une forme sensiblement rectangulaire, la section transversale du boîtier de grille lumineuse (10) correspondant de préférence à un pentagone irrégulier.

6. Agencement de boîtier de grille lumineuse selon l'une des revendications 1 à 5,
**caractérisé en ce que**
l'espace de logement (26) présente une section transversale triangulaire, et **en ce que** l'agencement de boîtier de grille lumineuse comprend en outre une monture à coulisseau (38) qui permet un pivotement (46) du coulisseau (18) autour d'un axe parallèle à ladite au moins une rangée d'éléments émetteurs ou d'éléments récepteurs.

7. Grille lumineuse
- comportant au moins un agencement de boîtier de grille lumineuse selon l'une des revendications 1 à 6,
- un certain nombre d'éléments émetteurs et/ou d'éléments récepteurs agencés en au moins une rangée dans le boîtier de grille lumineuse (10), et
- au moins un câble de connexion (24) mené à travers l'espace de logement (26) pour la mise en contact électrique de la grille lumineuse.
